# EUROPEAN PATENT APPLICATION

(11) **EP 4 760 992 A1**
(43) Date of publication of application: **17.06.2026**
(21) Application number: 25307000.7
(22) Date of filing: 01.12.2025
(51) Int. Cl.: H01R 4/44, H02G 5/00

(54) **ELECTRICAL CONNECTOR AND ELECTRICAL SYSTEM**

(30) Priority: 13.12.2024 CN 202423089602 U
(71) Applicant: SCHNEIDER ELECTRIC INDUSTRIES SAS, 92500 Rueil-Malmaison (FR)
(72) Inventor: SONG, Xianfeng, Guangzhou Guangdong, 510530 (CN)
(74) Representative: Plasseraud IP

(57) **Abstract**

Embodiments of the disclosure provide an electrical connector and an electrical system. The electrical connector includes a pair of covers, a plurality of insulators, and a plurality of conductive assemblies. The plurality of insulators are disposed between the pair of covers and spaced apart from each other to define a connection region for insertion of a busbar between adjacent insulators of the plurality of insulators. Each conductive assembly is disposed between corresponding adjacent insulators of the plurality of insulators and is coupled to one of the corresponding adjacent insulators. Each conductive assembly includes a metal substrate and a conductive connecting member. The conductive connecting member includes a contact plate. The contact plate is disposed on a side of the metal substrate facing towards the connection region and is coupled to the metal substrate.

## Description

### FIELD

Embodiments of the present disclosure generally relate to the field of electrical equipment, and in particular, to an electrical connector and an electrical system.

### BACKGROUND

In an electrical system, in order to achieve an electrical connection between two busbar groups, an electrical connector is usually disposed between them. In some conventional electrical connectors, aluminum plates sometimes serve as conductor materials inside the electrical connector, thereby reducing material costs. However, the aluminum plates tend to form an oxide layer with poor electrical conductivity at their surfaces during use, so that a relatively high contact resistance occurs at electrical connections. This not only causes more electrical energy to be lost due to conversion into thermal energy, but also causes a local temperature increase, posing a potential risk to safe and stable operation of the entire circuit system.

### SUMMARY

An object of embodiments of the present disclosure is to provide an electrical connector and an electrical system to at least partially solve the above problems and other potential problems.

In a first aspect of the present disclosure, an electrical connector is provided. The electrical connector includes: a pair of covers; a plurality of insulators disposed between the pair of covers and spaced apart from each other to define a connection region for insertion of a busbar between adjacent insulators of the plurality of insulators; and a plurality of conductive assemblies, each conductive assembly being disposed between corresponding adjacent insulators of the plurality of insulators and coupled to one of the corresponding adjacent insulators. Each conductive assembly includes: a metal substrate; and a conductive connecting member including a contact plate disposed on a side of the metal substrate facing towards the connection region and coupled to the metal substrate.

In some embodiments, the contact plate is welded to the metal substrate.

In some embodiments, the contact plate is connected to the metal substrate through ultrasonic welding, the contact plate is made of a copper material, and the metal substrate is made of an aluminum material.

In some embodiments, the contact plate is connected to the metal substrate through a plurality of solder joints, and a ratio of a total coverage area of the plurality of solder joints to a contact area between the contact plate and the metal substrate is greater than or equal to 10%.

In some embodiments, the contact plate is connected to the metal substrate through solder joints arranged in a dot pattern or through a strip-like solder seam.

In some embodiments, opposite ends of the metal substrate in a busbar insertion direction are respectively provided with a guiding inclined surface, opposite ends of the contact plate in the busbar insertion direction are provided with a guiding part fitted with the corresponding guiding inclined surface to guide the busbar to be inserted into the corresponding connection region along the guiding part.

In some embodiments, the conductive connecting member further includes: a pair of first flanges respectively disposed at the opposite ends of the contact plate in the busbar insertion direction, and being formed through bending from an edge of the contact plate, where each first flange is inserted between the metal substrate and the corresponding insulator.

In some embodiments, the conductive connecting member further includes: a pair of second flanges respectively disposed at opposite ends of the contact plate in a direction perpendicular to the busbar insertion direction, and being formed through bending from the edge of the contact plate, where an end of each second flange away from the contact plate is inserted between the metal substrate and the corresponding insulator.

In some embodiments, a side of the insulator facing towards the connection region is provided with a limiting groove, and the conductive assembly is disposed in the limiting groove and the conductive connecting member protrudes out of the limiting groove and adapted to be in contact with the corresponding busbar.

In some embodiments, the electrical connector further includes: a pair of elastic members disposed between each cover of the pair of covers and the plurality of insulators, and configured to apply a force to the plurality of insulators to cause the plurality of insulators to abut against the corresponding conductive assemblies.

In some embodiments, the electrical connector further includes: a plurality of installation members respectively disposed within the plurality of connection regions and coupled to corresponding insulators.

In some embodiments, the contact plate is of an integral structure; or the contact plate includes: a pair of contact parts spaced apart from each other along the busbar insertion direction and respectively corresponding to one or more regions of a side of the metal substrate facing towards the connection region.

In some embodiments, each contact part of the pair of contact parts includes: a single contact part; or a plurality of sub-contact parts spaced apart from each other.

In a second aspect of the present disclosure, an electrical system is provided. The electrical system includes: the electrical connector of the first aspect of the present disclosure; and a busbar group including a plurality of busbars, where each busbar is inserted into the corresponding connection region of the plurality of connection regions along the busbar insertion direction, and each contact plate is in contact with two busbars.

In embodiments of the present disclosure, the electrical connector includes a pair of covers, a plurality of insulators, and a plurality of conductive assemblies. The plurality of insulators are disposed between the pair of covers and spaced apart from each other to define a connection region for insertion of a busbar between adjacent insulators of the plurality of insulators. Each conductive assembly is disposed between corresponding adjacent insulators of the plurality of insulators and is coupled to one of the corresponding adjacent insulators. Each conductive assembly includes a metal substrate and a conductive connecting member. The conductive connecting member includes a contact plate. The contact plate is disposed on a side of the metal substrate facing towards the connection region and is coupled to the metal substrate. With this arrangement, the anti-oxidation performance of the portion of the metal substrate connected to the contact plate of the conductive connecting member is improved, and the influence of the oxidation generated during use on the electrical connection performance between the metal substrate and the contact plate can be reduced. During use, current flows from the metal substrate to the busbar or from the busbar to the metal substrate via the contact plate, since the busbar is not in direct contact with the metal substrate, the contact resistance at the electrical connection is reduced, helping to reduce the electrical energy loss and lower the temperature of the system, thereby improving the stability of the electrical system.

It should be understood that the content described in this content section is not intended to limit the key features or important features of embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, where:
FIG. 1 shows a perspective view of an electrical connector according to an embodiment of the present disclosure;
FIG. 2 shows a schematic diagram of an electrical connector according to an embodiment of the present disclosure;
FIG. 3 shows an exploded view of a conductive assembly according to an embodiment of the present disclosure, in which a guiding inclined surface is shown;
FIG. 4 shows an exploded view of a conductive assembly according to an embodiment of the present disclosure, in which a first flange and a second flange are shown; and
FIG. 5 shows a perspective view of a conductive assembly according to another embodiment of the present disclosure, in which a pair of contact parts are shown.

Description of reference numerals:
X busbar insertion direction; Y direction perpendicular to the busbar insertion direction;
11 cover
12 insulator; 120: limiting groove;
13 connection region;
14: conductive assembly; 141: metal substrate; 1410: guiding inclined surface; 142: conductive connecting member; 1420: contact plate; 1420a; contact part; 1421: first flange; 1422: second flange; 1423: guiding part; 1424: solder joint;
15 elastic member;
16 installation member;
17 connecting assembly.

### DETAILED DESCRIPTION

Embodiments of the present disclosure will be described in more detail below with reference to the accompanying drawings. While embodiments of the present disclosure are shown in the drawings, it should be understood that the present disclosure may be implemented in various forms and should not be limited by the embodiments set forth herein. Rather, these embodiments are provided to make this disclosure more thorough and complete, and to fully convey the scope of the present disclosure to those skilled in the art.

As used herein, the term "including" and variations thereof represent openness, i.e., "including but not limited to". Unless specifically stated, the term "or" means "and/or". The term "based on" means "based at least in part on". The terms "an example embodiment" and "an embodiment" mean "at least one example embodiment". The term "another embodiment" means "at least one further embodiment". The terms "first", "second", and the like may refer to different or identical objects.

As described above, in some conventional electrical connectors, aluminum plates sometimes serve as conductor materials inside the electrical connector, thereby reducing material costs. However, the aluminum plates tend to form an oxide layer with poor electrical conductivity at their surfaces during use, so that a relatively high contact resistance occurs at electrical connection. This not only causes more electrical energy to be lost due to conversion into thermal energy, but also causes a local temperature increase, posing a potential risk to safe and stable operation of the entire circuit system.

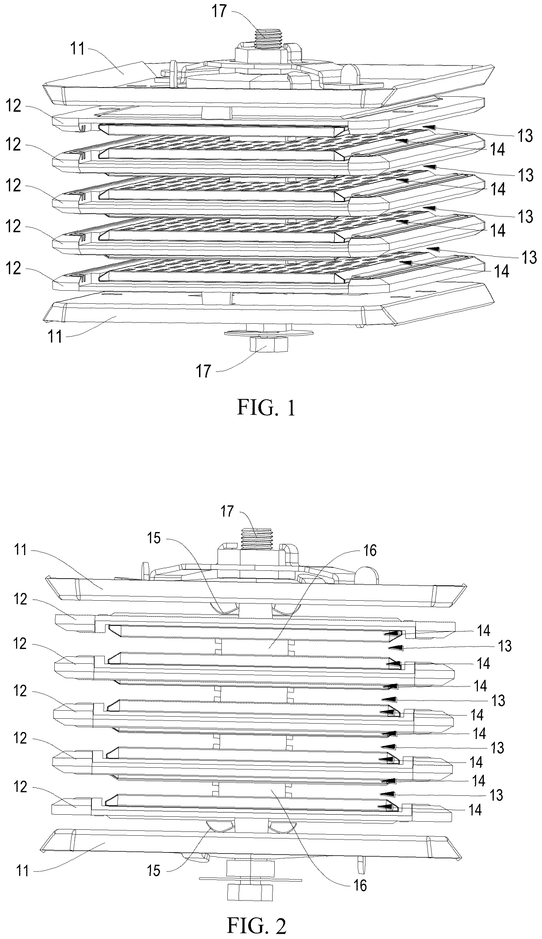

Embodiments of the present disclosure provide an electrical connector and an electrical system. The electrical connector includes a pair of covers, a plurality of insulators, and a plurality of conductive assemblies. The plurality of insulators are disposed between the pair of covers and spaced apart from each other to define a connection region for insertion of a busbar between adjacent insulators of the plurality of insulators. Each conductive assembly is disposed between corresponding adjacent insulators of the plurality of insulators and is coupled to one of the corresponding adjacent insulators. Each conductive assembly includes a metal substrate and a conductive connecting member. The conductive connecting member includes a contact plate. The contact plate is disposed on a side of the metal substrate facing towards the connection region and is coupled to the metal substrate. With this arrangement, the anti-oxidation performance of the portion of the metal substrate connected to the contact plate of the conductive connecting member is improved, and the influence of the oxidation generated during use on the electrical connection performance between the metal substrate and the contact plate can be reduced. During use, current flows from the metal substrate to the busbar or from the busbar to the metal substrate via the contact plate, since the busbar is not in direct contact with the metal substrate, the contact resistance at the electrical connection is reduced, helping to reduce the electrical energy loss and lower the temperature of the system, thereby improving the stability of the electrical system. The principles of the present disclosure will be described in detail below with reference to FIGS. 1 to 5.

As shown in FIGS. 1 and 2, the electrical connector includes a pair of covers 11, a plurality of insulators 12, and a plurality of conductive assemblies 14. The pair of covers 11 may protect a plurality of components inside the electrical connector and may fix the plurality of components in place. The plurality of insulators 12 may be disposed at predetermined intervals between the pair of covers 11, and the plurality of insulators 12 may provide electrical isolation to prevent short circuits between different busbars. A connection region 13 may be formed between adjacent insulators 12 of the plurality of insulators 12. For example, four connection regions 13 may be formed between five insulators 12, and a busbar may be inserted in each connection region 13. When the electrical connector is connected to a busbar group, a plurality of busbars of the busbar group may be respectively inserted into the plurality of connection regions 13. In addition, the electrical connector may be simultaneously connected to a plurality of busbar groups, thereby achieving electrical connection between the plurality of busbar groups.

As shown in FIGS. 1 and 2, the electrical connector further includes a plurality of conductive assemblies 14. Each conductive assembly 14 is disposed between corresponding adjacent insulators 12 of the plurality of insulators 12 and is coupled to one of the corresponding adjacent insulators 12. As an example, four connection regions 13 may be formed between five insulators 12, and one conductive assembly 14 may be provided in each connection region of the four connection regions. When the four busbars are inserted into the corresponding connection regions 13, the busbars may be in contact with the corresponding conductive assemblies 14.

As another example, as shown in FIG. 2, two conductive assemblies 14 may be provided in each connection region 13, and the conductive assemblies 14 may be connected to the corresponding insulators 12 on the sides of the corresponding insulators 12 facing towards the connection region 13. With this arrangement, when the busbar is inserted into the connection region 13, two sides of the busbar are in contact with the conductive assemblies 14, which can improve the electrical conductivity between the busbar and the conductive assemblies 14.

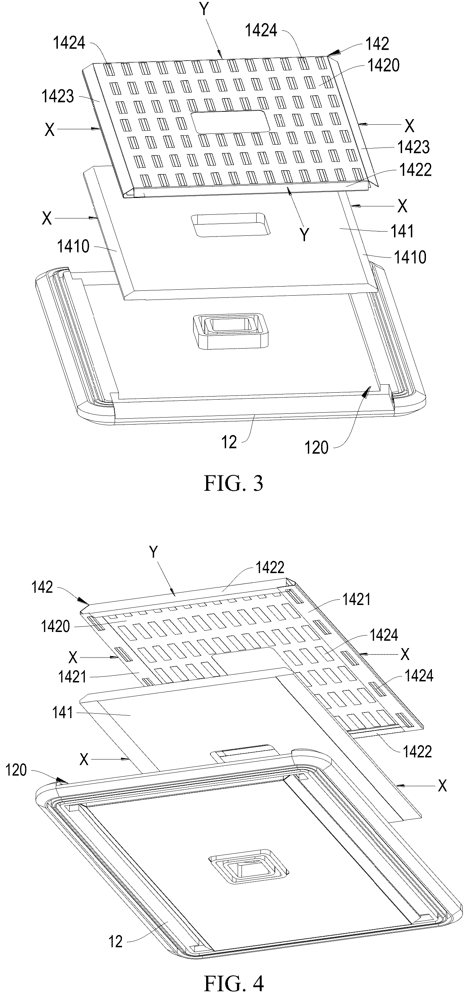

As shown in FIGS. 3 and 4, each conductive assembly 14 includes a metal substrate 141 and a conductive connecting member 142. The metal substrate 141, as a main current carrier, can transmit electrical energy from one busbar to another. The conductive connecting member 142 includes a contact plate 1420. The contact plate 1420 is disposed on a side of the metal substrate 141 facing towards the connection region 13. During the process of manufacturing the conductive assembly 14, an oxide layer on a surface of the metal substrate 141 may be removed, and then the contact plate 1420 is connected to the metal substrate 141. In some embodiments, the oxide layer on the surface of the metal substrate 141 may be removed during the connection between the contact plate 1420 and the metal substrate 141. During subsequent use, the metal substrate 141 and the contact plate 1420 can maintain a good contact state, and no loosening will occur at their contact position, thereby reducing the occurrence of oxidation.

With this arrangement, the anti-oxidation performance of the portion of the metal substrate 141 connected to the contact plate 1420 of the conductive connecting member 142 is improved, and the influence of the oxidation generated during use on the electrical connection performance between the metal substrate 141 and the contact plate 1420 can be reduced. During use, current can flow from the metal substrate 141 to the busbar or from the busbar to the metal substrate 141 via the contact plate 1420, since the busbar is not in direct contact with the metal substrate 141, the contact resistance at the electrical connection is reduced, helping to reduce the electrical energy loss and lower the temperature of the system, thereby improving the stability of the electrical system.

It should be understood that, in the scheme according to embodiments of the present disclosure, the conductive connecting member 142 is disposed on the surface of the metal substrate 141, and there is a significant difference between this scheme and the scheme of disposing a plating layer on the surface of the metal substrate 141. Regarding the scheme with the plating layer, taking an aluminum substrate as an example, in order to ensure that the aluminum substrate has good electrical connectivity and corrosion resistance, it is necessary to first plate a layer of copper on the aluminum substrate, and then plate a layer of tin. As an intermediate layer, copper can improve the quality and adhesion of the tin layer to solve the problem of poor direct bonding effect between tin and aluminum. However, this double-layer plating increases the complexity of the process, making it difficult to ensure compatibility and uniformity among the layers. In addition, the cost of the multi-layer plating is relatively high, and related expenses such as plating solution maintenance and waste liquid treatment also need to be considered. Most importantly, although the tin layer can provide a certain corrosion resistance, its current-carrying capacity depends on the quality of the copper layer. If the quality of the copper layer is poor, it will affect the final electrical performance. In comparison, in embodiments of the present disclosure, by disposing the conductive connecting member 142 on the surface of the metal substrate 141, the manufacturing process is simple, the cost is relatively low, and a good electrical conductivity is provided.

In some examples, the scheme of the surface of the metal substrate 141 being provided with the conductive connecting member 142 of the present disclosure differs in structure from the scheme of the surface of the metal substrate 141 being provided with the plating layer, with differences including but not limited to: for example, the arrangement of the surface of the metal substrate 141 being provided with the conductive connecting member 142 of the present disclosure means that the conductive connecting connector 142 and the metal substrate 141 are separate and independent structures from each other, and the conductive connecting connector 142 may be connected to the metal substrate 141 (such as by welding as described below); for another example, the conductive connecting member 142 (or the contact plate 1420 of the conductive connecting member 142) of the present disclosure may be a sheet (such as copper sheet structure described below), a plate, or the like, which is different from the layer of the plating layer scheme (for example, the plating layer is formed as a film layer). This is merely illustrative and is not a limitation of embodiments of the present disclosure.

In some embodiments, an aluminum plate may serve as the metal substrate 141, and the conductive connecting member 142 may be made of a copper material that is not easily oxidized. Aluminum plates are widely used due to their good electrical conductivity and thermal conductivity as well as relatively low cost, but their surfaces readily form high resistance aluminum oxide films. A copper conductive connecting member 142 is disposed on the surface of the aluminum substrate, which can overcome the problem of high resistance of the aluminum oxide film. Copper has lower resistivity and excellent anti-oxidation performance, and can maintain stable electrical contact for a long time. When the copper contact plate 1420 is combined with the aluminum substrate, even if an oxide layer is formed on the surface of the aluminum substrate, the current can still be transmitted to the interior of the aluminum substrate through the copper part, thereby reducing the electrical energy loss caused by the aluminum oxide layer.

It should be understood that, in other embodiments, the metal substrate 141 may be made of other materials whose surfaces tend to form an oxide layer having a high resistance, while the conductive connecting member 142 need to have good anti-oxidation performance. The metal substrate 141 and the conductive connecting member 142 are made of different materials, and the present disclosure is not intended to limit specific materials.

In some embodiments, the contact plate 1420 is welded to the metal substrate 141. By welding the contact plate 1420 to the metal substrate 141, looseness caused by factors such as vibration and temperature changes during use can be avoided, thereby reducing the occurrence of oxidation at the connection position between the contact plate 1420 and the metal substrate 141, and helping to maintain good electrical conductivity.

In some embodiments, as shown in FIGS. 3 and 4, the contact plate 1420 is connected to the metal substrate 141 through solder joints 1424 arranged in a dot pattern, for example, arranged in an array. In this way, the solder joints 1424 arranged in the dot pattern may provide a stable mechanical and electrical connection, while dissipating stresses and avoiding fatigue or failure issues that may arise from a single connection point.

It should be understood that, in other embodiments, the contact plate 1420 is connected to the metal substrate 141 through a strip-like solder seam, for example, achieved through seam welding or dense zero-pitch spot welding. With this arrangement, the strip-like solder seam can provide not only a large-area contact region, but also enhance mechanical strength and electrical conductivity.

In some embodiments, an ultrasonic welding technology may be used to achieve the connection between the contact plate 1420 and the metal substrate 141. The energy generated by high-frequency vibration causes the material to be locally heated to a molten state and then be rapidly cooled and solidified under the action of pressure, thereby forming robust solder joints 1424 with good electrical conductivity. In addition, the aluminum conductor is easy to form an oxide film on its surface in a natural environment, by adopting the ultrasonic welding technology, the oxide film at the solder joints 1424 can be removed during the welding process, and a good electrical connection is formed, thereby reducing the influence of the oxide layer on the electrical connection performance.

In some embodiments, the contact plate 1420 is connected to the metal substrate 141 through a plurality of solder joints 1424. A ratio of a total coverage area of the plurality of solder joints 1424 to an actual contact area between the contact plate 1420 and the metal substrate 141 is greater than or equal to a predetermined ratio, for example, the ratio ≥ 10%. When the total coverage area of the plurality of solder joints 1424 is relatively large, a larger surface area can participate in the current transmission process, thereby reducing the resistance and helping to improve the electrical performance of the system. In addition, a relatively large total coverage area of the plurality of solder joints 1424 may further enhance the strength of the structure, so that a stable electrical connection is maintained between the conductive connecting member 142 and the contact plate 1420.

In some embodiments, the electrical connector adopts a copper conductive connecting member 142 having a hardness similar to that of the aluminum substrate, and a Vickers hardness of the copper conductive connecting member 142 may be, for example, in the range of 50-60. In this way, the problem of poor welding or cold solder joints during the welding process can be solved.

In some embodiments, as shown in FIG. 3, opposite ends of the metal substrate 141 in the busbar insertion direction X are respectively provided with a guiding inclined surface 1410. Opposite ends of the contact plate 1420 in the busbar insertion direction X are respectively provided with a guiding part 1423 fitted with the corresponding guiding inclined surface 1410. When the busbar enters the corresponding connection region 13 along the guiding part 1423, the angle and shape of the guiding part 1423 helps the busbar correct its position, and even if there is a slight deviation in the insertion position, the busbar can still be smoothly inserted into the corresponding connection region 13, thereby improving the efficiency of docking between the busbar and the electrical connector.

In some embodiments, as shown in FIGS. 3 and 4, the conductive connecting member 142 further includes a pair of first flanges 1421. The pair of first flanges 1421 are respectively disposed at the opposite ends of the contact plate 1420 in the busbar insertion direction X. The pair of first flanges 1421 are formed through bending from an edge of the contact plate 1420, and they are respectively located at two ends of the contact plate 1420. Each first flange 1421 may be inserted between the metal substrate 141 and the corresponding insulator 12. In this way, the contact plate 1420 can be prevented from being displaced or loosened during use through physical limiting, thereby ensuring the stability of the electrical connection.

In other embodiments, as shown in FIGS. 3 and 4, the conductive connecting member 142 may further include a pair of second flanges 1422. The pair of second flanges 1422 are respectively disposed at opposite ends of the contact plate 1420 in a direction Y perpendicular to the busbar insertion direction X. The pair of second flanges 1422 are formed through bending from the edge of the contact plate 1420, and an end of each second flange 1422 away from the contact plate 1420 is inserted between the metal substrate 141 and the corresponding insulator 12. When subjected to the lateral force generated by the insertion of the busbar, the pair of second flanges 1422 may provide an additional fixing effect, so as to prevent the edge of the contact plate 1420 from warping, thereby avoiding unsoldering or loosening between the contact plate 1420 and the metal substrate 141.

In some embodiments, as shown in FIGS. 3 and 4, a side of the insulator 12 facing towards the connection region 13 is provided with a limiting groove 120. The conductive assembly 14 is disposed in the position-limiting groove 120, and the conductive connecting member 142 of the conductive assembly 14 protrudes out of the limiting groove 120 and may be in contact with the inserted busbar. In this way, the contact plate 1420 of the conductive connecting member 142 may be in stable contact with the busbar, and through the physical constraint of the limiting groove 120, the conductive connecting member 142 can be prevented from unnecessary movement or deformation during use.

In some embodiments, as shown in FIG. 2, the electrical connector further includes a pair of elastic members 15. The pair of elastic members 15 are disposed between each cover of the pair of covers 11 and the plurality of insulators 12. The elastic member 15 may apply a continuous pressure to the insulators 12 to cause the insulators 12 to tightly abut against the corresponding conductive assemblies 14. When the busbar is inserted into the connection region 13 between the insulators 12, the insulators 12 will move closer to each other due to the action of the elastic member 15, thereby promoting the formation of a tight contact between the conductive assembly 14 (including the metal substrate 141 and the conductive connecting member 142) and the busbar. In this way, the stability of the connection between the busbar and the conductive assembly 14 can be improved. In addition, the presence of the elastic members 15 can also compensate for dimensional changes caused by factors such as temperature changes and material aging.

In some embodiments, as shown in FIG. 2, the electrical connector further includes a plurality of installation members 16. The plurality of installation members 16 are respectively disposed in corresponding connection regions 13 and coupled to the corresponding insulators 12. Each installation member 16 is located between two adjacent insulators 12, serving the functions of supporting and separating, and can maintain a necessary distance between two adjacent insulators 12, thereby forming a connection region 13 to facilitate the insertion and positioning of the busbar. In addition, the installation member 16 may further fix the insulator 12 and the conductive assembly 14. During use, the insulator 12 and the conductive assembly 14 can be prevented from positional deviation or loosening.

In some embodiments, as shown in FIGS. 1 and 2, the electrical connector further includes a connecting assembly 17. The connecting assembly 17 is coupled to the pair of covers 11, the plurality of insulators 12, the plurality of conductive assemblies 14, and the plurality of installation members 16. The connecting assembly 17 secures the pair of covers 11 together to form an outer frame of the electrical connector. In addition, the connecting assembly 17 is further connected to the internal insulators 12, the conductive assemblies 14, and the installation members 16, and adapted to secure all components together. When the external force or environment changes, relative positions of the various components can remain unchanged.

In some embodiments, as shown in FIGS. 3 and 4, the contact plate 1420 may be an integral metal plate. The contact plate 1420 is of an integral structure and is made of a single material, without segments or connection point. The contact plate 1420 may cover the entire or most of the region of the side surface of the metal substrate 141, thereby providing a uniform electrical connection.

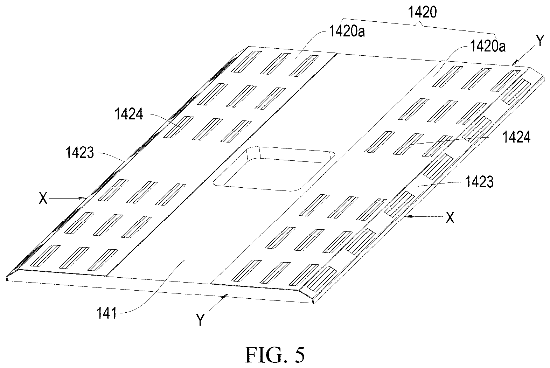

In other embodiments, as shown in FIG. 5, the contact plate 1420 may include a pair of contact parts 1420a. The pair of contact parts 1420a are spaced apart from each other along the busbar insertion direction X and respectively correspond to one or more regions of a side of the metal substrate 141 facing towards the busbar.

As an example, as shown in FIG. 5, the contact plate 1420 includes two contact parts 1420a. The two contact parts 1420a respectively correspond to two regions of the side of the metal substrate 141 facing towards the busbar. During use, the pair of contact parts 1420a are in contact with two busbars. The current flows from one of the two busbars to one of the contact parts 1420a, is then transmitted to the metal substrate 141, and then flows to the other one of the two busbars via the other contact 1420a. In this way, high efficiency and stability of current transmission can be ensured, and energy loss caused by poor contact or excessively high resistance is reduced.

As another example, each contact part 1420a of the pair of contact parts 1420a may further include a plurality of sub-contact parts spaced apart from each other. For example, the pair of contact parts 1420a may include four sub-contact parts. The four sub-contact parts are divided into two pairs, each contact part 1420a includes two sub-contact parts, for example, two sub-contact parts are arranged in the left region, and two sub-contact parts are arranged in the right region. Here, the four sub-contact parts correspond to four regions of the side of the metal substrate 141 facing towards the connection region 13 respectively. During use, current flows from one busbar into two sub-contact parts of the four sub-contact parts, is then transmitted to the metal substrate 141, and then flows to the other busbar via the other two sub-contact parts of the four sub-contact parts. In this way, high efficiency and stability of current transmission can be ensured, and energy loss caused by poor contact or excessively high resistance is reduced.

It should be understood that, in other embodiments, each contact part 1420a may further include three or four sub-contact parts, and the present disclosure is not intended to be limited thereto.

In some embodiments, as shown in FIG. 5, the pair of contact parts 1420a are respectively provided with a guiding part 1423. When the busbar slides into the corresponding position along the guiding part 1423, the guiding part 1423 can correct the insertion angle of the busbar.

In a second aspect of the present disclosure, an electrical system is provided. The electrical system includes any of the aforementioned electrical connectors and a plurality of busbar groups. Each busbar group includes a plurality of busbars. The plurality of busbars are respectively inserted into corresponding connection regions 13 in the electrical connector along the busbar insertion direction X. When the busbars are inserted into these connection regions 13, each contact plate 1420 may be in contact with two busbars, respectively. With this arrangement, the plurality of busbar groups can be connected together through the same electrical connector, thereby achieving the transmission and distribution of electric power.

In the electrical system, the anti-oxidation performance of the portion of the metal substrate 141 connected to the contact plate 1420 of the conductive connecting member 142 is improved, and the influence of the oxidation generated during use on the electrical connection performance between the metal substrate 141 and the contact plate 1420 can be reduced. During use, current flows from the metal substrate 141 to the busbar or from the busbar to the metal substrate 141 via the contact plate 1420, since the busbar is not in direct contact with the metal substrate 141, the contact resistance at the electrical connection is reduced, helping to reduce the electrical energy loss and lower the temperature of the system, thereby improving the stability of the electrical system.

Various embodiments of the present disclosure have been described above, which are illustrative, not exhaustive, and are not limited to embodiments disclosed. Many modifications and variations will be apparent to those of ordinary skill in the art without departing from the scope of the illustrated embodiments. The selection of the terms used herein is intended to explain the principles of the embodiments, practical applications, or technical improvements in the marketplace, or to enable others of ordinary skill in the art to understand the embodiments disclosed herein.

## Claims

1. An electrical connector, **characterized by** comprising:
a pair of covers (11);
a plurality of insulators (12) disposed between the pair of covers (11) and spaced apart from each other to define a connection region (13) for insertion of a busbar between adjacent insulators of the plurality of insulators (12); and
a plurality of conductive assemblies (14), each conductive assembly (14) being disposed between corresponding adjacent insulators (12) of the plurality of insulators (12) and coupled to one of the corresponding adjacent insulators (12), and each conductive assembly (14) comprising:
a metal substrate (141); and
a conductive connecting member (142) comprising a contact plate (1420) disposed on a side of the metal substrate (141) facing towards the connection region (13) and coupled to the metal substrate (141).

2. The electrical connector of claim 1, **characterized in that** the contact plate (1420) is welded to the metal substrate (141).

3. The electrical connector of claim 1 or 2, **characterized in that** the contact plate (1420) is connected to the metal substrate (141) through ultrasonic welding, the contact plate (1420) is made of a copper material, and the metal substrate (141) is made of an aluminum material.

4. The electrical connector of claim 2, **characterized in that** the contact plate (1420) is connected to the metal substrate (141) through a plurality of solder joints (1424), and a ratio of a total coverage area of the plurality of solder joints (1424) to a contact area between the contact plate (1420) and the metal substrate (141) is greater than or equal to 10%.

5. The electrical connector of claim 2, **characterized in that** the contact plate (1420) is connected to the metal substrate (141) through solder joints (1424) arranged in a dot pattern or through a strip-like solder seam.

6. The electrical connector of any of claims 1 to 5, **characterized in that** opposite ends of the metal substrate (141) in a busbar insertion direction (X) are respectively provided with a guiding inclined surface (1410), opposite ends of the contact plate (1420) in the busbar insertion direction (X) are provided with a guiding part (1423) fitted with the corresponding guiding inclined surface (1410) to guide the busbar to be inserted into the corresponding connection region (13) along the guiding part (1423).

7. The electrical connector of claim 6, **characterized in that** the conductive connecting member (142) further comprises:
a pair of first flanges (1421) respectively disposed at the opposite ends of the contact plate (1420) in the busbar insertion direction (X), and being formed through bending from an edge of the contact plate (1420), wherein each first flange (1421) is inserted between the metal substrate (141) and the corresponding insulator (12).

8. The electrical connector of claim 6 or 7, **characterized in that** the conductive connecting member (142) further comprises:
a pair of second flanges (1422) respectively disposed at opposite ends of the contact plate (1420) in a direction (Y) perpendicular to the busbar insertion direction (X), and being formed through bending from the edge of the contact plate (1420), wherein an end of each second flange (1422) away from the contact plate (1420) is inserted between the metal substrate (141) and the corresponding insulator (12).

9. The electrical connector of any of clams 1 to 8, **characterized in that** a side of the insulator (12) facing towards the connection region (13) is provided with a limiting groove, and the conductive assembly (14) is disposed in the limiting groove (120) and the conductive connecting member (142) protrudes out of the limiting groove (120) and adapted to be in contact with the corresponding busbar.

10. The electrical connector of any of claims 1 to 9, **characterized by** further comprising:
a pair of elastic members (15) disposed between each cover (11) of the pair of covers (11) and the plurality of insulators (12), and configured to apply a force to the plurality of insulators (12) to cause the plurality of insulators (12) to abut against the corresponding conductive assemblies (14); and/or
a plurality of installation members (16) respectively disposed within the plurality of connection regions (13) and coupled to corresponding insulators (12).

11. The electrical connector of any of claims 1 to 5, **characterized in that**
the contact plate (1420) is of an integral structure; or
the contact plate (1420) comprises:
a pair of contact parts (1420a) spaced apart from each other along the busbar insertion direction (X) and respectively corresponding to one or more regions of a side of the metal substrate (141) facing towards the connection region (13).

12. The electrical connector of claim 11, **characterized in that** each contact part (1420a) of the pair of contact parts (1420a) comprises:
a single contact part; or
a plurality of sub-contact parts spaced apart from each other.

13. An electrical system, **characterized by** comprising:
the electrical connector of any of claims 1 to 12; and
a busbar group comprising a plurality of busbars, wherein each busbar is inserted into the corresponding connection region of the plurality of connection regions (13) along the busbar insertion direction (X), and each contact plate (1420) is in contact with two busbars.
